# EUROPÄISCHE PATENTSCHRIFT

(11) **EP 2 259 093 B1**
(45) Veröffentlichungstag und Bekanntmachung des Hinweises auf die Patenterteilung: **29.04.2015**
(21) Anmeldenummer: 09007413.9
(22) Anmeldetag: 04.06.2009
(51) Int. Cl.: G01V 8/20

(54) **Optoelektronische Sensoranordnung und Verfahren zum Betrieb einer solchen**
Optoelectronic sensor assembly and method for operating the sensor assembly
Dispositif de capteur optoélectronique et procédé de fonctionnement d'un tel dispositif

(43) Veröffentlichungstag der Anmeldung: 08.12.2010
(73) Patentinhaber: SICK AG, 79183 Waldkirch (DE)
(72) Erfinder: Klingelhöfer, Christian, Dr., 79110 Freiburg (DE); Heinrichs, Yves, 78108 Freiburg (DE); Grabinger, Jörg, 79312 Emmendingen (DE)
(74) Vertreter: Westphal, Mussgnug & Partner Patentanwälte mbB

(56) Entgegenhaltungen:
- EP-A- 1 306 693
- DE-A1- 10 011 598
- DE-A1-102005 018 263
- DE-A1-102005 045 578
- JP-A- 10 041 802
- JP-A- 2002 217 703

## Beschreibung

Bekannt sind optoelektronische Sensoranordnungen mit mehreren, insbesondere wenigstens zwei, Lichtsendern und mit mehreren, insbesondere wenigstens zwei, Lichtempfängern, wobei jeweils ein Lichtsender und ein zugehöriger Lichtempfänger ein Lichtsender-/Lichtempfängerpaar bilden, welche nebeneinander angeordnet sind. Die Lichtsender senden Licht in einen Überwachungsbereich aus, während die Lichtempfänger Licht aus dem Überwachungsbereich empfangen und entsprechende Empfangssignale erzeugen, welche in der Regel mit Hilfe einer Auswerteeinheit ausgewertet werden. Mit derartigen optoelektronischen Sensoranordnungen kann der Überwachungsbereich daraufhin überwacht werden, ob dieser von Objekten durchquert wird. Die bekannten optoelektronischen Sensoranordnungen weisen weiterhin eine Lichtsendersteuerung sowie eine Lichtempfängersteuerung auf, wobei die Lichtsender und die Lichtempfänger zur Abgabe und zum hierzu synchronen Empfang von Lichtimpulsen jeweils einzeln, zeitlich nacheinander und zyklisch aktivierbar sind, wobei für jeden Zyklus eine vorgebebene Zahl von Lichtimpulsen je Lichtsender ausgesendet wird.

Weiterhin bekannt sind optoelektronische Sicherheitssensoren, welche einen Überwachungsbereich auf Eindringen von Objekten überwachen und in Abhängigkeit davon ein Schaltsignal ausgeben, welches dazu verwendet wird, eine Anlage oder eine Maschine beim Eintreten einer Sicherheitsanforderung in einen sicheren Zustand zu überführen. Diese Sicherheitssensoren ermitteln, wenn sich eine Person einer Anlage oder einer Maschine nähert und insbesondere einen kritischen Sicherheitsabstand unterschreitet, so dass in diesem Fall die Maschine oder Anlage angehalten oder zumindest mit verminderter Betriebsgeschwindigkeit betrieben wird. Diese Sicherheitssensoren sind als sichere Sensoren im Sinne von Maschinensicherheit ausgebildet, was bedeutet, dass sichere Sensoren oder die mit ihnen verbundenen Auswerte- und/oder Steuereinheiten den einschlägigen Normen EN 954 oder EN 61508, welche sich mit der Maschinensicherheit befassen, genügen müssen, beispielsweise eine zweikanalige Struktur, Teststrukturen oder sich selbst überprüfende Strukturen aufweisen müssen oder auf sonstige Art und Weise in der Lage sein müssen, auch bei auftretenden Fehlern weiterhin zuverlässig zu funktionieren und die Fehler selbstständig zu erkennen. Gerade bei derartigen Sicherheitssensoren ist es von höchster Relevanz, dass Fremdlicht, insbesondere gepulstes Licht, das beispielsweise aus Blitzlampen, Stoboskopquellen, Lichtblitzen von Schweißgeräten oder weiteren insbesondere baugleichen in der Nähe angeordneten optoelektronischen Sensoranordnungen stammen kann, zuverlässig erkannt wird. Insbesondere muss gepulstes Fremdlicht, das in ungünstigen Fällen ein Impuls-Pausenverhältnis aufweist, das dem Nutzsignal der optoelektronischen Sensoranordnung entspricht, zuverlässig erkannt werden und darf nicht fälschlicherweise für das entsprechende Nutzsignal der Lichtsender der optoelektronischen Sensoranordnung gehalten werden, was vortäuschen könnte, dass der Überwachungsbereich frei ist, obwohl ein Objekt die optoelektronische Sensoranordnung durchquert.

Es ist bekannt, zur Feststellung von Fremdlicht, das die optoelektronische Sensoranordnung täuschen könnte, die Lichtempfänger der optoelektronischen Sensoranordnung zu einem anderen Zeitpunkt als zu dem, zu welchem die Lichtimpulse der zugehörigen Lichtsender erwartet werden, zu aktivieren und auf Störlicht zu überprüfen. Nachteilig bei diesem Verfahren ist jedoch, dass das Fremdlicht zu einem Zeitpunkt gesucht wird, zu dem es nicht stört, da in diesem Zeitfenster die Lichtempfänger normalerweise nicht aktiviert sind und keinen Lichtimpuls von dem zugehörigen Lichtsender erwarten.

Die DE 42 24 784 C2 offenbart, dass Nutzlicht anderer Wellenlänge als die des zu erwartenden Fremdlings verwendet werden kann, um die optoelektronische Sensoranordnung immun gegenüber Fremdlicht zu machen. Alternativ können Lichtstrahlen vom Lichtsender zum Lichtempfänger sehr eng gebündelt werden, so dass aus einem anderen Winkel eingestrahltes Fremdlicht nicht zu den Lichtempfängern gelangt. Als weitere Alternative wird die Verwendung von hochfrequenzmoduliertem Licht und eine selektive Empfangsschaltung offenbart.

Schließlich offenbart die DE 42 24 784 C2 ein Verfahren zum Betrieb von Lichtschranken, Lichtgittern oder Lichtvorhängen, welches auf der Erkenntnis beruht, dass Fremdlichtimpulse eine Maximalfrequenz haben, die in der Praxis nicht überschritten wird und daher innerhalb eines Zeitraums, der kleiner ist als der Minimalabstand von Fremdlichtimpulsen mindestens zwei Nutzimpulse ausgesandt werden und der Empfänger dann schon eine einwandfreie Übertragung signalisiert, wenn nur eine der empfangenen Lichtimpulsgruppen einwandfrei, d. h. ohne Störeinflüsse durch Fremdlicht identifiziert wurde. Auch dieses Verfahren stellt jedoch nicht sicher, dass Störeinflüsse einer weiteren baugleichen optoelektronischen Sensoranordnung, deren Nutzlicht im ungünstigsten Fall synchron zum Nutzlicht der optoelektronischen Sensoranordnung ausgesendet wird und daher einen freien Überwachungsbereich trotz eines in dem Überwachungsbereich angeordneten Objekts vortäuschen kann, sicher erkannt werden.

Verfahren zum Betrieb einer optoelektronischen Sensoranordnung und eine entsprechende Sensoranordnung sind aus der EP 1 306 693 A1, der DE 10 2005 045 578 A1, aus der JP 2002 217703 A und aus der DE 10 2005 018 263 A1 bekannt. Dabei wird die Störlichterkennung gemäß der EP 1 306 693 A1 in einem separaten Spezialmodus, gemäß der DE 10 2005 045 578 A1 und der JP 2002 217703 A in einer Periode unmittelbar nach und/oder vor der Lichteinstrahl/Empfangsperiode durchgeführt und gemäß der DE 10 2005 018 263 während innerhalb der Sendepausen vorgegebenen Zeitfenstern vorgenommen.

Die Aufgabe der Erfindung besteht daher darin, ein Verfahren zum Betrieb einer optoelektronischen Sensoranordnung bereitzustellen, mit welchem störendes Fremdlicht sicher erkannt werden kann. Weiterhin besteht die Aufgabe der Erfindung daher darin, eine optoelektronische Sensoranordnung bereitzustellen, welche störendes Fremdlicht sicher feststellen kann.

Die Aufgabe der Erfindung wird gelöst durch ein Verfahren zum Betrieb einer optoelektronischen Sensoranordnung mit den Merkmalen des Patentanspruchs 1 und eine optoelektronische Sensoranordnung mit den Merkmalen des Patentanspruchs 10.

Vorteilhafte Ausgestaltungen und Weiterbildungen der Erfindung sind in den abhängigen Ansprüchen angegeben.

Das erfindungsgemäße Verfahren zum Betrieb einer optoelektronischen Sensoranordnung, bei dem mehrere Lichtsender jeweils einzeln, zeitlich nacheinander und zyklisch zum Aussenden von Lichtimpulsen aktiviert werden und zugeordnete Lichtempfänger synchron dazu zum Empfang der Lichtimpulse aktiviert werden, wobei in jedem Zyklus eine vorgegebene Zahl von Lichtimpulsen je Lichtsender ausgesendet wird, zeichnet sich dadurch aus, dass von einer Zahl von mehreren Zyklen für wenigstens einen der Zyklen wenigstens einer der Lichtsender nicht aktiviert wird, während der zugeordnete Lichtempfänger aktiviert wird. Es wird somit für wenigstens einen der Lichtsender eine sogenannte Dunkelmessung durchgeführt, bei welcher der zugeordnete Lichtempfänger zu exakt dem Zeitpunkt aktiviert wird, zu dem bei einem normal ablaufenden Zyklus auch der Lichtsender aktiviert würde, der Lichtsender jedoch zu diesem Zeitpunkt nicht aktiviert wird, so dass der Lichtempfänger in diesem Zeitfenster überprüfen kann, ob störendes Fremdlicht eingetragen wird, welches sich im Normalbetrieb mit dem Lichtimpuls des Lichtsenders überlagern würde und im ungünstigsten Fall einen freien Lichtweg vortäuschen könnte. Auf diese Art und Weise wird das Fremdlicht zu genau dem Zeitpunkt gesucht, zu welchem es in der Regel tatsächlich stören würde, so dass auf diese Weise sichergestellt ist, dass auch gepulstes Fremdlicht, welches sich exakt mit dem Nutzlicht der optoelektronischen Sensoranordnung überlagert, detektiert werden kann.

Gemäß einer bevorzugten Ausführungsform der Erfindung werden für wenigstens einen der Zyklen der Zahl von mehreren Zyklen alle Lichtsender nicht aktiviert, um auch störendes Fremdlicht, das nur in einen Teil der Lichtempfänger einstrahlt, zuverlässig detektieren zu können.

In einer alternativen bevorzugten Ausführungsform der Erfindung wird für jeweils einen der Zyklen der Zahl von mehreren Zyklen einer der Lichtsender nicht aktiviert, wobei insbesondere die Zahl der Zyklen der Zahl der Lichtsender entspricht und in jedem Zyklus ein anderer Lichtsender nicht aktiviert wird, so dass auf dieser Weise ebenfalls sichergestellt wird, dass auch störendes gepulstes Fremdlicht, das nur auf einen Teil der Lichtempfänger fällt, zuverlässig detektiert wird.

Um die Verfügbarkeit der optoelektronischen Sensoranordnung durch die Dunkelmessung nicht zu stark zu beeinträchtigen, sollte die Zahl der Zyklen mindestens 50 und vorzugsweise etwa 100 betragen.

Gemäß einer bevorzugten Ausführungsform der Erfindung wird bei Aktivierung des Lichtsenders und des zugehörigen Lichtempfängers ein Alarmsignal, Abschaltsignal, Auslösesignal oder Ähnliches ausgegeben, wenn der Lichtempfänger kein Lichtsignal detektiert, während bei Aktivieren des Lichtempfängers und Nicht-Aktivieren des zugeordneten Lichtsenders ein Auslösesignal, Alarmsignal, Abschaltsignal oder Ähnliches ausgegeben wird, wenn ein Lichtsignal detektiert wird. Wesentlich dabei ist, dass sich die Erwartungshaltung des Lichtempfängers für die Dunkelmessung ändert.

Daher ist es insbesondere wichtig, dass die Zahl der Zyklen mitgezählt wird, damit der Lichtempfänger Kenntnis darüber hat, zu welchem Zeitpunkt ein Lichtsignal des zugehörigen Lichtsenders eingehen muss und bei Ausbleiben dieses Lichtsignals ein Objekt in den Überwachungsbereich eingedrungen ist, und andererseits Kenntnis darüber hat, zu welchem Zeitpunkt aufgrund der Nicht-Aktivierung des zugeordneten Lichtsenders kein Signal des Lichtsenders eingehen darf, sondern eingehendes Licht als Fremdlicht erkannt werden muss.

Da häufig Lichtsender und Lichtempfänger auf unterschiedlichen Seiten des Überwachungsbereichs angeordnet sind, ist eine elektrische Entkopplung der beiden Elemente wünschenswert. Insbesondere sind bei vielen optoelektronischen Sensoranordnungen von jedem Lichtsender-/Lichtemfängerpaar entweder der Lichtsender oder der Lichtempfänger in einem ersten Element und der zugehörige Lichtempfänger oder Lichtsender in einem zweiten Element angeordnet, wobei gemäß einer bevorzugten Ausführungsform der Erfindung die Zahl der Zyklen in einem wenigstens einen Lichtsender enthaltenden Element mitgezählt wird und mit Hilfe des Lichtsenders in Form einer codierten Lichtimpulsfolge an das andere Element übertragen wird, um auf diese Weise eine drahtlose Synchronisation der beiden Elemente zu erreichen.

Um die Verfügbarkeit der optoelektronischen Sensoranordnung weiter zu erhöhen, wird vorzugsweise bei Aktivieren des Lichtsenders und des zugehörigen Lichtempfängers ein Alarmsignal, Abschaltsignal, Auslösesignal oder Ähnliches erst ausgegeben, wenn der Lichtempfänger in zwei aufeinanderfolgenden Zyklen ein Lichtsignal detektiert.

Die erfindungsgemäße optoelektronische Sensoranordnung mit mehreren Lichtsendern und mit mehreren Lichtempfängern, wobei jeweils ein Lichtsender und ein zugehöriger Lichtempfänger ein Lichtsender-/Lichtempfängerpaar bilden, wobei die Lichtsende-/Lichtempfängerpaare nebeneinander angeordnet sind, und mit einer Lichtsendersteuerung sowie einer Lichtempfängersteuerung, wobei die Lichtsender und die Lichtempfänger zur Abgabe und zum hierzu synchronen Empfang von Lichtimpulsen jeweils einzeln, zeitlich nacheinander und zyklisch aktivierbar sind, und die Lichtsendersteuerung für jeden Zyklus zum Aussenden einer vorgegebenen Zahl von Lichtimpulsen je Lichtsender ausgebildet ist, zeichnet sich dadurch aus, dass die Lichtsendersteuerung dazu ausgebildet ist, von einer Zahl von mehreren Zyklen für wenigstens eine der Zyklen wenigstens einen der Lichtsender nicht zu aktivieren.

Vorzugsweise ist die Lichtsendersteuerung dazu ausgebildet, von der Zahl von mehreren Zyklen entweder für wenigstens einen der Zyklen alle Lichtsender oder für jeweils einen der Zyklen einen der Lichtsender nicht zu aktivieren, um auch gepulstes Fremdlicht, das nur auf einen Teil der Lichtempfänger der optoelektronischen Sensoranordnung fällt, zuverlässig detektieren zu können. Bei der zweiten Alternative entspricht vorzugsweise die Zahl der Zyklen der Zahl der Lichtsender und es wird in jedem Zyklus ein anderer Lichtsender nicht aktiviert.

Gemäß einer besonders bevorzugten Ausführungsform ist von jedem Lichtsender-/ Lichtempfängerpaar entweder der Lichtsender oder der Lichtempfänger in einem ersten Element und der zugehörige Lichtempfänger oder Lichtsender in einem zweiten Element angeordnet. Denkbar ist, dass entweder in einem Element nur Lichtsender und in dem anderen Element nur Lichtempfänger oder in beiden Elementen jeweils ein Teil der Lichtsender und der Lichtempfänger angeordnet ist. In letzterer Alternative sind besonders bevorzugt das erste und das zweite Element gleichartig ausgebildet, um einen besonders einfachen konstruktiven Aufbau zu ermöglichen.

Gemäß einer besonders bevorzugten Ausführungsform der Erfindung ist die optoelektronische Sensoranordnung als Sicherheitslichtgitter ausgebildet, da insbesondere bei Sicherheitslichtgittern die Detektion von Fremdlicht bei exakter Überlagerung einer gepulsten Fremdlichtquelle mit dem Nutzlicht der optoelektronischen Sensoranordnung gewährleistet werden muss.

Die Erfindung wird anhand der nachfolgenden Figuren ausführlich erläutert.

Es zeigen:
- Figur 1: eine schematische Darstellung einer optoelektronischen Sensoranordnung und
- Figur 2: eine schematische Darstellung von Sendeimpulsen der optoelektronischen Sensoranordnung gemäß Figur 1 und zeitlicher Aktivierung der Lichtempfänger der optoelektronischen Sensoranordnung gemäß Figur 1.

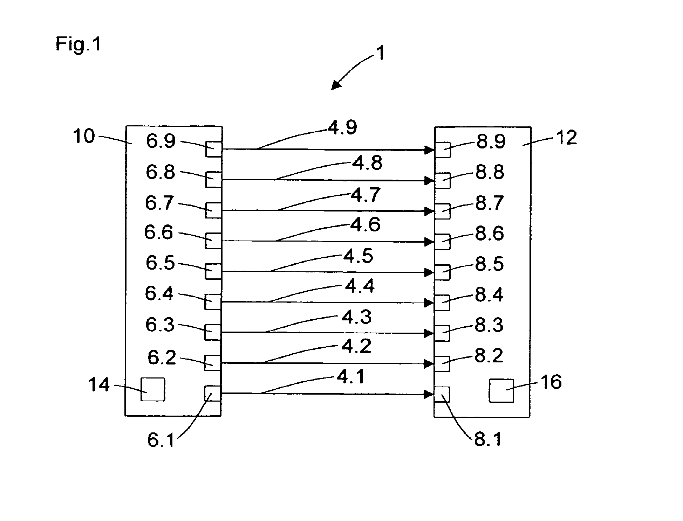

Die Fig. 1 zeigt eine optoelektronische Sensoranordnung 1 mit einer Lichtsendeeinheit 10 und einer Lichtempfangseinheit 12.

Die Lichtsendeeinheit weist mehrere nebeneinander angeordnete Lichtsender 6.1 - 6.9, während die Lichtempfangseinheit 12 mehrere nebeneinander angeordnete Lichtempfänger 8.1 - 8.9 aufweist. Jeweils ein Lichtsender 6.1 - 6.9 bildet mit jeweils einem Lichtempfänger 8.1 - 8-9 ein Lichtsender-/ Lichtempfängerpaar. Die Lichtsendeeinheit 10 und die Lichtempfangseinheit 12 sind dabei gegenüberliegend und beabstandet angeordnet und bilden zwischen sich einen Überwachungsbereich. Die Lichtsendeeinheit 10 bildet dabei ein erstes Element, während die Lichtempfängereinheit 12 ein zweites Element bildet. In der dargestellten Ausführungsform sind sämtliche Lichtsender 6.1 - 6.9 in dem ersten Element angeordnet, während sämtliche Lichtempfänger 8.1 - 8.9 in dem zweiten Element angeordnet sind. Es ist auch denkbar, dass ein Teil der Lichtsender 6.1 - 6.9 und ein Teil der Lichtempfänger 8.1 - 8.9 in dem ersten Element und der verbleibende Teil der Lichtsender 6.1 - 6.9 und der verbleibende Teil der Lichtempfänger 8.1 - 8.9 in dem zweiten Element angeordnet sind, wobei insbesondere von jedem Lichtsender-/ Lichtempfängerpaar entweder der Lichtsender 6.1 - 6.9 oder der Lichtempfänger 8.1 - 8.9 in dem ersten Element und der Lichtempfänger 8.1 - 8.9 oder der Lichtsender 6.1 - 6.9 in dem zweiten Element angeordnet sind. Insbesondere ist es möglich, die beiden Elemente gleichartig aufzubauen.

Fig. 1 zeigt zur Vereinfachung lediglich 9 Lichtsender-/Lichtempfängerpaare. In der Regel weist die optoelektronische sensoranordnung 1 50 bis 100 Lichtsender-/Lichtempfängerpaare auf.

Die Lichtsender 6.1 - 6.9 werden von einer Lichtsendersteuerung 14 zum zyklischen Senden von einzelnen Lichtimpulsen 2.1 - 2.9 angesteuert, wobei die Lichtimpulse 2.1 - 2.9 Lichtstrahlen 4.1 - 4.9 bilden, die von den gegenüberliegenden Lichtempfängern 8.1 - 8.9 zyklisch empfangen werden. Zur Aktivierung der Lichtempfänger 8.1 - 8.9 und zum Auswerten der empfangenen Lichtimpulse 2.1 - 2.9 ist eine Lichtempfängersteuerung 16 in der Lichtempfangseinheit 12 vorgesehen. Ein Zyklus für die optoelektronische Sensoranordnung 1 wird ausgehend von dem ersten Lichtstrahl 4.1 zwischen dem Lichtsender 6.1 und dem Lichtempfänger 8.1 festgelegt. Alternativ kann selbstverständlich jedes Lichtsender-/ Lichtempfängerpaar als Ausgangspunkt für einen Zyklus festgelegt werden.

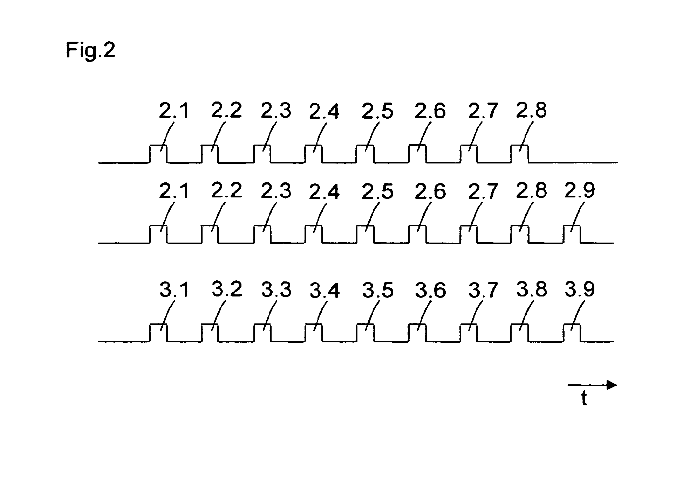

Figur 2 zeigt in der zweiten Zeile schematisch die Lichtimpulse 2.1 - 2.9, die von den Lichtsendern 6.1 - 6.9 in zeitlicher Abfolge ausgesendet werden. Jeweils ein Lichtimpuls 2.1 - 2.9 wird von je einem Lichtsender 6.1 - 6.9 gesendet, wobei die Lichtimpulse 2.1 - 2.9 den Strahlen 4.1 - 4.9 aus Figur 1 entsprechen. Die Lichtimpulse 2.1 - 2.9 sind gleich lang und weisen jeweils die gleiche Form auf.

Für die optoelektronische Sensoranordnung ist eine Zahl n von Zyklen vorgegeben, beispielsweise n=100. Ein Zyklus ohne Dunkelmessung verläuft in Form der zweiten Zeile aus Figur Ein Zyklus, in welchem lediglich einer der Lichtsender 6.1 - 6.9 nicht aktiviert wird, verläuft beispielsweise in Form der ersten Zeile aus Figur 2, bei welcher der Lichtsender 6.9 zu dem Zeitpunkt, zu dem er in einem Zyklus ohne Dunkelmessung den Lichtimpuls 2.9 aussendet, nicht aktiviert wird, so dass zu diesem Zeitpunkt von dem Lichtsender 6.9 kein Lichtimpuls ausgesendet wird. In anderen Zyklen kann analog einer der Lichtsender 6.1 - 6.8 nicht aktiviert werden. Alternativ ist auch ein Zyklus denkbar, in dem sämtliche der Lichtsender 6.1 - 6.9 nicht aktiviert werden.

Während der 100 Zyklen wird synchron zu jedem der Lichtsender 6.1 - 6.9 der zugehörige Lichtempfänger 8.1 - 8.9 in Zeitfenstern 3.1 - 3.9, wie in der dritten Zeile in Figur 2 dargestellt, aktiviert. In einem Zyklus ohne Dunkelmessung erwarten die Lichtempfänger 8.1 - 8.9 in dem entsprechenden Zeitfenster 3.1 - 3.9 den Eingang der Lichtimpulse 2.1 - 2.9 der Lichtsender 6.1 - 6.9. Geht ein entsprechendes Lichtsignal nicht ein, wird ein Alarmsignal, Auslösesignal oder Schaltsignal oder Ähnliches ausgegeben und beispielsweise eine Anlage oder Maschine in einen sicheren Zustand überführt.

In dem Zeitfenster, in dem jedoch bewusst einer der Lichtsender 6.1 - 6.9, in dem Beispiel gemäß Figur 2 insbesondere der Lichtsender 6.9, nicht aktiviert wird, erwartet der zugehörige Lichtempfänger 8.9 in dem Zeitfenster 3.9 kein Lichtsignal, ist jedoch trotzdem aktiviert, um störendes Fremdlicht, was sich in normalen Zyklen in dem Zeitfenster 3.9 mit dem Lichtimpuls 2.9 des Lichtsenders 6.9 überlagern würde, detektieren zu können. In einem derartigen Zyklus ist der Lichtempfänger 8.9 in dem Zeitfenster 3.9 in der Erwartungshaltung, kein Lichtsignal zu detektieren, da bekannt ist, dass der zugehörige Lichtsender 6.9 in diesem Zeitfenster 3.9 keinen Lichtimpuls aussendet. Falls in dem Zeitfenster 3.9 trotzdem ein Lichtsignal detektiert werden sollte, kann daraus geschlossen werden, dass störendes Fremdlicht in den Lichtempfänger 8.9 anfällt, so dass dementsprechend ein Alarmsignal, Auslösesignal, Schaltsignal oder Ähnliches ausgegeben werden kann.

In einer Alternative ist es möglich, beispielsweise bei einer Zahl von n=100 Zyklen in 99 Zyklen sämtliche der Lichtempfänger 6.1 - 6.9 jeweils zu ihrem entsprechenden Zeitpunkt zu aktivieren, wie in der zweiten Zeile gemäß Figur 2, und nur in einem Zyklus sämtliche der Lichtsender 6.1 - 6.9 nicht zu aktivieren.

Alternativ ist es möglich, bei einer bestimmten Zahl der Zyklen, beispielsweise 9, jeweils einen der Lichtsender 6.1 bis 6.9 nicht zu aktiveren, wobei in jedem der 9 Zyklen ein anderer der Lichtsender 6.1 - 6.9 nicht aktiviert wird. Denkbar ist es, die Zahl n gleich der Zahl m der Lichtsender 6.1 - 6.9 zu wählen, d. h. n=9, so dass in jedem Zyklus einer der Lichtsender 6.1 - 6.9 nicht aktiviert wird. Es ist jedoch auch möglich, zusätzlich zu den Zyklen, in denen jeweils einer der Lichtsender 6.1 - 6.9 nicht aktiviert wird, entweder einen oder mehrere weitere Zyklen vorzusehen, in denen alle Lichtsender 6.1 - 6.9 aktiviert werden. Um die Verfügbarkeit der optoelektronischen Sensoranordnung hoch zu halten, sollte gemittelt in jedem Zyklus nicht mehr als ein Lichtsender nicht aktiviert werden.

Damit die Lichtempfänger 8.1 - 8.9 Kenntnis darüber haben, in welchem Zeitfenster 3.1 - 3.9 ein Lichtimpuls 2.1 - 2.9 der Lichtsender 6.1 - 6.9 zu erwarten ist und bei Ausbleiben der Lichtimpulse 2.1 - 2.9 entsprechende Alarm-, Auslöse- oder Abschaltsignale ausgegeben werden können, oder in welchen Zeitfenstern 3.1 - 3.9 kein Lichtimpuls 2.1 - 2.9 zu erwarten ist, da die zugehörigen Lichtsender 6.1 - 6.9 nicht aktiviert wurden, und daher bei Detektieren eines Lichtsignals auf den Einfluss von störendem Fremdlicht geschlossen werden kann und dementsprechend ein Alarm-, Auslöse- oder Schaltsignal ausgegeben werden muss, ist es wesentlich, dass die Lichtsender 6.1 - 6.9 mit den Lichtempfängern 8.1 - 8.9 synchronisiert werden und insbesondere die Lichtempfänger 8.1 - 8.9 Kenntnis darüber haben, in welchem Zyklus die Lichtsender 6.1 - 6.9 gerade aktiviert werden. Daher wird die Zahl n der Zyklen mitgezählt. Dies erfolgt insbesondere in der Lichtsendeeinheit 10 in der Lichtsendersteuerung 14. Zur Synchronisierung der Lichtsendereinheit mit der Lichtempfängereinheit kann die Zahl n der Zyklen mit Hilfe eines der Lichtsender 6.1 - 6.9 in Form von einer codierten Lichtimpulsfolge an die Lichtempfängereinheit 12 drahtlos übertragen werden.

Die optoelektronische Sensoranordnung 1 ist insbesondere als Sicherheitslichtgitter ausgebildet und genügt den einschlägigen Sicherheitsnormen.

Dadurch, dass die Lichtempfänger 8.1 - 8.9 in genau dem Zeitfenster 3.1 - 3.9 nach störendem Fremdlicht suchen, indem in einem normalen Zyklus der zugehörige Lichtsender 6.1 - 6.9 den Lichtimpuls 2.1 - 2.9 aussenden würde, ist gewährleistet, dass auch gepulstes Fremdlicht mit einem Impuls-Pause-Verhältnis, das exakt dem Impuls-Pause-Verhältnis der optoelektronischen Sensoranordnung entspricht und synchron dazu ausgesendet wird, detektiert wird.

### Bezugszeichenliste

- 1: Sensoranordnung
- 10: Lichtsendereinheit
- 12: Lichtempfängereinheit
- 14: Lichtsendersteuerung
- 16: Lichtempfängersteuerung

- 2.1 bis 2.9: Lichtimpuls
- 3.1 bis 3.9: Zeitfenster
- 4.1 bis 4.9: Lichtstrahl
- 6.1 bis 6.9: Lichtsender
- 8.1 bis 8.9: Lichtempfänger

- n: Zahl
- m: Zahl

## Patentansprüche

1. Verfahren zum Betrieb einer optoelektronischen Sensoranordnung (1), bei dem mehrere Lichtsender (6.1-6.9) jeweils einzeln, zeitlich nacheinander und zyklisch zum Aussenden von Lichtimpulsen (2.1-2.9) aktiviert werden und zugeordnete Lichtempfänger (8.1-8.9) synchron dazu zum Empfang der Lichtimpulse (2.1-2.9) aktiviert werden, wobei in jedem Zyklus eine vorgegebene Zahl von Lichtimpulsen (2.1-2.9) je Lichtsender (6.1-6.9) ausgesendet wird,
**dadurch gekennzeichnet, dass** von einer Zahl (n) von mehreren Zyklen für wenigstens einen der Zyklen wenigstens einer der Lichtsender (6.1-6.9) nicht aktiviert wird, während der zugeordnete Lichtempfänger (8.1-8.9) zu exakt dem Zeitpunkt aktiviert wird, zu dem bei einem normal ablaufenden Zyklus auch der Lichtsender aktiviert würde.

2. Verfahren nach Anspruch 1,
**dadurch gekennzeichnet, dass** von der Zahl (n) von mehreren Zyklen für wenigstens einen der Zyklen alle Lichtsender (6.1-6.9) nicht aktiviert werden.

3. Verfahren nach Anspruch 1,
**dadurch gekennzeichnet, dass** von der Zahl (n) von mehreren Zyklen für jeweils einen der Zyklen einer der Lichtsender (6.1-6.9) nicht aktiviert wird.

4. Verfahren nach Anspruch 3,
**dadurch gekennzeichnet, dass** die Zahl der Zyklen (n) der Zahl der Lichtsender entspricht und in jedem Zyklus ein anderer Lichtsender (6.1-6.9) nicht aktiviert wird.

5. Verfahren nach einem der vorhergehenden Ansprüche,
**dadurch gekennzeichnet, dass** die Zahl (n) der Zyklen 100 entspricht.

6. Verfahren nach einem der vorhergehenden Ansprüche,
**dadurch gekennzeichnet, dass** bei Aktivieren des Lichtsenders (6.1-6.9) und des zugehörigen Lichtempfängers (8.1-8.9) ein Auslösesignal, Alarmsignal, Schaltsignal oder ähnliches ausgegeben wird, wenn der Lichtempfänger kein Lichtsignal detektiert, während bei Aktivieren des Lichtempfängers (8.1-8.9) und Nicht-Aktivieren des zugeordneten Lichtsenders (6.9) ein Auslösesignal, Alarmsignal, Schaltsignal oder ähnliches ausgegeben wird, wenn ein Lichtsignal detektiert wird.

7. Verfahren nach einem der vorhergehenden Ansprüche,
**dadurch gekennzeichnet, dass** bei Aktivieren des Lichtsenders (6.1-6.9) und des zugehörigen Lichtempfängers (8.1-8.9) ein Auslösesignal, Alarmsignal, Schaltsignal oder ähnliches ausgegeben wird, wenn der Lichtempfänger (8.1-8.9) in zwei aufeinanderfolgenden Zyklen kein Lichtsignal detektiert.

8. Verfahren nach einem der vorhergehenden Ansprüche,
**dadurch gekennzeichnet, dass** die Zahl (n) der Zyklen mitgezählt wird.

9. Verfahren nach einem der vorhergehenden Ansprüche,
**dadurch gekennzeichnet, dass** von jedem Lichtsender-/Lichtempfängerpaar entweder der Lichtsender (6.1-6.9) oder der Lichtempfänger (8.1-8.9) in einem ersten Element und der zugehörige Lichtempfänger (8.1-8.9) oder Lichtsender (6.1-6.9) in einem zweiten Element angeordnet ist und dass die Zahl (n) der Zyklen in einem wenigstens einen Lichtsender (6.1-6.9) enthaltenden Element mitgezählt wird und mithilfe des Lichtsenders (6.1-6.9) in Form einer codierten Lichtimpulsfolge an das andere Element übertragen wird.

10. Optoelektronische Sensoranordnung (1) mit mehreren Lichtsendern (6.1-6.9) und mit mehreren Lichtempfängern (8.1-8.9), wobei jeweils ein Lichtsender und ein zugehöriger Lichtempfänger ein Lichtsender-/Lichtempfängerpaar bilden, und mit einer Lichtsendersteuerung (14) sowie einer Lichtempfängersteuerung (16), wobei die Lichtsender (6.1-6.9) und die Lichtempfänger (8.1-8.9) zur Abgabe und zum hierzu synchronen Empfang von Lichtimpulsen (2.1-2.9) jeweils einzeln, zeitlich nacheinander und zyklisch aktivierbar sind, und die Lichtsendersteuerung (14) für jeden Zyklus zum Aussenden einer vorgegebenen Zahl von Lichtimpulsen (2.1-2.9) je Lichtsender (6.1-6.9) ausgebildet ist,
**dadurch gekennzeichnet, dass** die Lichtsendersteuerung dazu ausgebildet ist, von einer Zahl (n) von mehreren Zyklen für wenigstens einen der Zyklen wenigstens einen der Lichtsender (6.1-6.9) nicht zu aktivieren, während der zugeordnete Lichtempfänger (8.1-8.9) von der Lichtempfängersteuerung (16) zu exakt dem Zeitpunkt aktiviert wird, zu dem bei einem normal ablaufenden Zyklus auch der Lichtsender (6.1-6.9) aktiviert würde.

11. Optoelektronische Sensoranordnung nach Anspruch 10,
**dadurch gekennzeichnet, dass** die Lichtsendersteuerung (14) dazu ausgebildet ist, von einer Zahl (n) von mehreren Zyklen für wenigstens einen der Zyklen alle Lichtsender (6.1-6.9) nicht zu aktivieren.

12. Optoelektronische Sensoranordnung nach Anspruch 10,
**dadurch gekennzeichnet, dass** die Lichtsendersteuerung (14) dazu ausgebildet ist, von einer Zahl (n) von mehreren Zyklen für jeweils einen der Zyklen einen der Lichtsender (6.1-6.9) nicht zu aktivieren, wobei vorzugsweise die Zahl (n) der Zyklen der Zahl der Lichtsender (6.1-6.9) entspricht und in jedem Zyklus ein anderer Lichtsender (6.1-6.9) nicht aktiviert wird.

13. Optoelektronische Sensoranordnung nach einem der Ansprüche 10 bis 12,
**dadurch gekennzeichnet, dass** von jedem Lichtsender-/Lichtempfängerpaar entweder der Lichtsender (6.1-6.9) oder der Lichtempfänger (8.1-8.9) in einem ersten Element und der zugehörige Lichtempfänger (8.1-8.9) oder Lichtsender (6.1-6.9) in einem zweiten Element angeordnet ist.

14. Optoelektronische Sensoranordnung nach Anspruch 13,
**dadurch gekennzeichnet, dass** das erste und das zweite Element gleichartig ausgebildet sind.

15. Optoelektronische Sensoranordnung nach einem der vorhergehenden Ansprüche,
**dadurch gekennzeichnet, dass** die optoelektronische Sensoranordnung (1) als Sicherheitslichtgitter ausgebildet ist.

## Claims

1. Method for operating an optoelectronic sensor assembly (1), in which several light transmitters (6.1-6.9) are activated in each case individually, one after another chronologically, and cyclically to emit light pulses (2.1-2.9), and synchronously to that, corresponding light receivers (8.1-8.9) are activated to receive the light pulses (2.1-2.9), wherein in each cycle a predetermined number of light pulses (2.1-2.9) per light transmitter (6.1-6.9) are emitted, **characterised in that** from a number (n) of several cycles, for at least one of the cycles, at least one of the light transmitters (6.1-6.9) is not activated, whilst the corresponding light receiver (8.1-8.9) is activated at exactly that point in time at which, in a normal cycle, the light transmitter would be activated too.

2. Method according to claim 1,
**characterised in that** from the number (n) of several cycles, for at least one of the cycles, all the light transmitters (6.1-6.9) are not activated.

3. Method according to claim 1,
**characterised in that** from the number (n) of several cycles, in each case for one of the cycles, one of the light transmitters (6.1-6.9) is not activated.

4. Method according to claim 3,
**characterised in that** the number of cycles (n) corresponds to the number of light transmitters and in each cycle a different light transmitter (6.1-6.9) is not activated.

5. Method according to one of the preceding claims,
**characterised in that** the number (n) of cycles corresponds to 100.

6. Method according to one of the preceding claims,
**characterised in that** on the activation of the light transmitter (6.1-6.9) and of the corresponding light receiver (8.1-8.9), a trigger signal, alarm signal, switch signal or similar is emitted if no light signal is detected by the light receiver, whilst on the activation of the light receiver (8.1-8.9) and non-activation of the corresponding light transmitter (6.9), a trigger signal, alarm signal, switch signal or similar is emitted if a light signal is detected.

7. Method according to one of the preceding claims,
**characterised in that** on the activation of the light transmitter (6.1-6.9) and the corresponding light receiver (8.1-8.9), a trigger signal, alarm signal, switch signal or similar is emitted if the light receiver (8.1-8.9) detects no light signal in two consecutive cycles.

8. Method according to one of the preceding claims,
**characterised in that** the number (n) of cycles is counted.

9. Method according to one of the preceding claims,
**characterised in that** of each light transmitter/light receiver pair, either the light transmitter (6.1-6.9) or the light receiver (8.1-8.9) is arranged in a first element and the corresponding light receiver (8.1-8.9) or light transmitter (6.1-6.9) is arranged in a second element, and that the number (n) of cycles is counted in an element containing at least one light transmitter (6.1-6.9) and is transferred in the form of a coded light pulse sequence to the other element with the aid of the light transmitter (6.1-6.9).

10. Optoelectronic sensor assembly (1) with several light transmitters (6.1-6.9) and with several light receivers (8.1-8.9), wherein in each case one light transmitter and one corresponding light receiver form a light transmitter/light receiver pair, and with a light transmitter control unit (14) as well as a light receiver control unit (16), wherein the light transmitters (6.1-6.9) and the light receivers (8.1-8.9) can be activated to emit and correspondingly synchronously receive light pulses (2.1-2.9) in each case individually, chronologically after one another and cyclically, and the light transmitter control unit (14) is designed, for each cycle, to emit a predetermined number of light pulses (2.1-2.9) per light transmitter (6.1-6.9), **characterised in that** the light transmitter control unit is designed, from a number (n) of several cycles, for at least one of the cycles, not to activate at least one of the light transmitters (6.1-6.9), whilst the corresponding light receiver (8.1-8.9) is activated by the light receiver control unit (16) at exactly the point in time at which, in a normal cycle, the light transmitter (6.1-6.9) would also be activated.

11. Optoelectronic sensor assembly according to claim 10,
**characterised in that** the light transmitter control unit (14) is designed, from a number (n) of several cycles, for at least one of the cycles, not to activate all the light transmitters (6.1-6.9).

12. Optoelectronic sensor assembly according to claim 10,
**characterised in that** the light transmitter control unit (14) is designed, from a number (n) of several cycles, for one of the cycles in each case, not to activate one of the light transmitters (6.1-6.9), wherein preferably the number (n) of cycles corresponds to the number of light transmitters (6.1-6.9) and in each cycle a different light transmitter (6.1-6.9) is not activated.

13. Optoelectronic sensor assembly according to one of the claims 10 to 12,
**characterised in that** of each light transmitter/light receiver pair, either the light transmitter (6.1-6.9) or the light receiver (8.1-8.9) is arranged in a first element and the corresponding light receiver (8.1-8.9) or light transmitter (6.1-6.9) is arranged in a second element.

14. Optoelectronic sensor assembly according to claim 13,
**characterised in that** the first element and the second element are of the same design.

15. Optoelectronic sensor assembly according to one of the preceding claims,
**characterised in that** the optoelectronic sensor assembly (1) is designed as a safety light curtain.

## Revendications

1. Procédé de gestion d'un dispositif de capteur optoélectronique (1) selon lequel plusieurs émetteurs de lumière (6.1 - 6.9) sont respectivement activés séparément, les uns après les autres dans le temps et cycliquement pour émettre des impulsions de lumière (2.1 - 2.9) et, des récepteurs de lumière (8.1 - 8.9) associés sont activés en synchronisme pour recevoir les impulsions de lumière (2.1 - 2.9), dans chaque cycle, un nombre prédéfini d'impulsions de lumière (2.1 - 2.9) étant émis par chaque émetteur de lumière (6.1 - 6.9),
**caractérisé en ce que**
dans un nombre (n) de plusieurs cycles, pour au moins l'un des cycles, au moins l'un des émetteurs de lumière (6.1 - 6.9) n'est pas activé tandis que le récepteur de lumière (8.1 - 8.9) associé est activé exactement à l'instant auquel, dans un cycle se déroulant normalement l'émetteur de lumière aurait également été activé.

2. Procédé conforme à la revendication 1,
**caractérisé en ce que**
dans le nombre (n) de plusieurs cycles, pour au moins l'un des cycles tous les émetteurs de lumière (6.1 - 6.9) ne sont pas activés.

3. Procédé conforme à la revendication 1,
**caractérisé en ce que**
dans le nombre (n) de plusieurs cycles, pour au moins l'un des cycles respectifs l'un des émetteurs de lumière (6.1 - 6.9) n'est pas activé.

4. Procédé conforme à la revendication 3,
**caractérisé en ce que**
le nombre de cycles (n) correspond au nombre d'émetteurs de lumière, et, dans chaque cycle, un autre émetteur de lumière (6.1 - 6.9) n'est pas activé.

5. Procédé conforme à l'une des revendications précédentes,
**caractérisé en ce que**
pour le nombre (n) de cycles correspond à 100.

6. Procédé conforme à l'une des revendications précédentes,
**caractérisé en ce que**
lors de l'activation de l'émetteur de lumière (6.1 - 6.9) et du récepteur de lumière (8.1 - 8.9) associé, un signal de déclenchement, un signal d'alarme, un signal de commutation ou un signal similaire est délivré lorsque le récepteur de lumière ne détecte aucun signal de lumière tandis que, lors de l'activation du récepteur de lumière (8.1 - 8.9) et l'absence d'activation de l'émetteur de lumière (6.9) associé un signal de déclenchement, un signal d'alarme, un signal de commutation ou un signal similaire est délivré lorsqu'un signal de lumière est détecté.

7. Procédé conforme à l'une des revendications précédentes,
**caractérisé en ce que**
lors de l'activation de l'émetteur de lumière (6.1 - 6.9) et du récepteur de lumière (8.1 - 8.9) associé, un signal de déclenchement, un signal d'alarme, un signal de commutation ou un signal similaire est délivré lorsque le récepteur de lumière (8.1 - 8.9) ne détecte aucun signal de lumière pendant deux cycles successifs.

8. Procédé conforme à l'une des revendications précédentes,
**caractérisé en ce que**
le nombre (n) de cycles est compté.

9. Procédé conforme à l'une des revendications précédentes,
**caractérisé en ce que**
dans chacune des paires émetteur de lumière/récepteur de lumière, l'émetteur de lumière (6.1 - 6.9) ou le récepteur de lumière (8.1 - 8.9) est monté dans un premier élément tandis que le récepteur de lumière (8.1 - 8.9) ou l'émetteur de lumière (6.1 - 6.9) associé est monté dans un second élément, le nombre (n) des cycles dans un élément contenant au moins un émetteur de lumière (6.1 - 6.9), est compté et est transmis à l'aide de l'émetteur de lumière (6.1 - 6.9) à l'autre élément sous la forme d'une succession d'impulsions de lumière codées.

10. Dispositif de capteur optoélectronique (1) comprenant plusieurs émetteurs de lumière (6.1 - 6.9) et plusieurs récepteurs de lumière (8.1 - 8.9), un émetteur de lumière et un récepteur de lumière associé formant respectivement une paire émetteur de lumière/récepteur de lumière, ainsi qu'une commande (14) d'émetteurs de lumière et une commande (16) de récepteurs de lumière, les émetteurs de lumière (6.1 - 6.9) et les récepteurs de lumière (8.1 - 8.9) pouvant respectivement être activés séparément, les uns après les autres dans le temps et de façon cyclique pour permettre de délivrer et de recevoir en synchronisme des impulsions de lumière (2.1 - 2.9), et la commande d'émetteurs de lumière (14) étant réalisée pour chacun des cycles pour permettre d'émettre un nombre prédéfini d'impulsions de lumière (2.1 - 2.9) par émetteur de lumière (6.1 - 6.9),
**caractérisé en ce que**
la commande d'émetteurs de lumière est réalisée de sorte que dans un nombre (n) de plusieurs cycles, pour au moins l'un des cycles au moins l'un des émetteurs de lumière (6.1 - 6.9) ne soit pas activé alors que le récepteur de lumière (8.1 - 8.9) associé est activé par la commande de récepteurs de lumière (16) à exactement l'instant pour lequel dans un cycle se déroulant de façon normale l'émetteur de lumière (6.1 - 6.9) aurait également été activé.

11. Dispositif de capteur optoélectronique conforme à la revendication 10,
**caractérisé en ce que**
la commande d'émetteurs de lumière (14) est réalisée de sorte que, dans un nombre (n) de plusieurs cycles pour au moins l'un des cycles tous les émetteurs de lumière (6.1 - 6.9) ne soient pas activés.

12. Dispositif de capteur optoélectronique conforme à la revendication 10,
**caractérisé en ce que**
la commande d'émetteurs de lumière (14) est réalisée de sorte que dans un nombre (n) de plusieurs cycles, pour au moins l'un des cycles l'un des émetteurs de lumière (6.1 - 6.9) ne soit pas activé, le nombre (n) de cycle correspondant de préférence au nombre d'émetteurs de lumière (6.1 - 6.9) et, dans chaque cycle un autre émetteur de lumière (6.1 - 6.9) n'étant pas activé.

13. Dispositif de capteur optoélectronique conforme à l'une des revendications 10 à 12,
**caractérisé en ce que**
pour chaque paire émetteur de lumière/récepteur de lumière l'émetteur de lumière (6.1 - 6.9) ou le récepteur de lumière (8.1 - 8.9) est monté dans un premier élément tandis que le récepteur de lumière (8.1 - 8.9) ou l'émetteur de lumière (6.1 - 6.9) associé est monté dans un second élément.

14. Dispositif de capteur optoélectronique conforme à la revendication 13,
**caractérisé en ce que**
le premier élément et le second élément sont réalisés de manière similaire.

15. Dispositif de capteur optoélectronique conforme à l'une des revendications précédentes,
**caractérisé en ce qu'**
il est réalisé sous la forme d'une grille lumineuse de sécurité.
